# EUROPÄISCHE PATENTSCHRIFT

(11) **EP 1 279 842 B1**
(45) Veröffentlichungstag und Bekanntmachung des Hinweises auf die Patenterteilung: **01.04.2015**
(21) Anmeldenummer: 02017087.4
(22) Anmeldetag: 29.07.2002
(51) Int. Cl.: F16B 5/02, F16B 37/04, F16B 43/02

(54) **Kombimutter mit schwenkbarer Unterlegscheibe**
Fastener assembly with tilting washer
Système d'écrou avec rondelle pivotante

(30) Priorität: 27.07.2001 DE 10136829
(43) Veröffentlichungstag der Anmeldung: 29.01.2003
(73) Patentinhaber: NEDSCHROEF PLETTENBERG GmbH, D-58840 Plettenberg (Holthausen) (DE)
(72) Erfinder: Dunker, Bernd, 51709 Marienhalde (DE)
(74) Vertreter: Patentanwälte Dörner & Kötter PartG mbB

(56) Entgegenhaltungen:
- GB-A- 2 138 529
- US-A- 3 425 473
- US-A- 3 678 979
- US-A- 4 362 449

## Beschreibung

### I. Anwendungsgebiet

Die Erfindung betrifft eine Mutter, insbesondere eine Kombimutter.

### II. Technischer Hintergrund

Es sind bereits Unterlegscheiben bekannt, die zum Herstellen einer Schraubverbindung unter der Pressfläche einer Mutter bzw. eines Schraubenkopfes angeordnet werden. Diese Unterlegscheiben erfüllen z.B. den Zweck, beim Festziehen der Mutter bzw. des Schraubenkopfes eine Reibung zwischen der Pressfläche und der darunter liegenden Befestigungsfläche, z.B. die Oberfläche eines Bauteils, zu vermeiden, wodurch die Oberflächenbeschichtung des Bauteils beschädigt wird. Durch die Unterlegscheibe wird erreicht, daß beim Festziehen der Schraubverbindung nur zwischen der Mutter bzw. dem Schraubenkopf und der Unterlegscheibe eine Relativbewegung stattfindet, während sich die Unterlegscheibe gegenüber der Oberfläche, z.B. des Bauteils, nicht bewegt, also im Ruhezustand verbleibt.

Es ist weiterhin bekannt, Unterlegscheiben unverlierbar, jedoch zueinander drehbar, z.B. über einen ringörmigen Hinterschnitt sowohl axial als auch radial formschlüssig mit der Mutter zu verbinden, wobei die Unterlegscheibe zusammen mit der Mutter ausschließlich eine Ausrichtung senkrecht zu einem Bolzenschaft, auf den z.B. die Mutter aufgeschraubt wird, einnimmt.

Darüber hinaus sind Unterlegscheiben bekannt, bei denen eine obere bzw. untere Seite zur anderen, unteren bzw. oberen Seite geneigt ist, so daß beim Festziehen der Mutter der Bolzenschaft in eine zur Befestigungsfläche geneigte Position gezwungen wird, um somit in dem Schaft Scherspannungen zu erzeugen, so daß ein unbeabsichtigtes Lösen verhindert ist.

Allgemein besteht beim Aufschrauben einer Mutter mit einer Unterlegscheibe auf einen zur Befestigungsfläche geneigten Bolzenschaft das Problem, daß die Unterlegscheibe durch die Mutter in einer zu ihr parallelen Position gezwungen wird und somit beim Festziehen der Mutter durch die schräg anliegende Unterlegscheibe die Oberfläche beschädigt wird, so daß weiterhin eine feste Schraubverbindung nicht mehr gewährleistet ist.

In diesem Zusammenhang ist aus der US 3425473 eine miteinander verklebte Mutter mit Unterlegscheibe (die Verbindung reißt beim Festziehen der Mutter ab) bekannt, die auf einer sphärischen Kontaktfläche aufeinander liegen und damit auch auf schräg stehende Schraubbolzen aufgeschraubt werden können, wobei die konkave Kontaktfläche auf Seiten der Mutter angeordnet ist, was erst bewirkt, dass die Anlageposition der Beilagscheibe annähernd unverändert bei der regulären Position verbleibt trotz unterschiedlicher Schrägstellungswinkel des Gewindebolzens.

### III. Darstellung der Erfindung

### a.) Technische Aufgabe

Es ist daher die Aufgabe der vorliegenden Erfindung, eine Kombimutter mit einer Unterlegscheibe zu schaffen, die möglichst schnell und einfach sowohl auf einen von der Befestigungsfläche senkrecht aufragenden Bolzenschaft als auch auf einen zur Befestigungsfläche, z.B. eines Bauteils, geneigten Bolzenschaft aufgeschraubt und festgezogen werden kann, ohne die unter der Unterlegscheibe befindliche Befestigungsfläche zu beschädigen.

### b.) Lösung der Aufgabe

Diese Aufgabe wird durch die Merkmale des Anspruch 1 gelöst. Vorteilhafte Ausführungsformen ergeben sich aus den Unteransprüchen.

Erfindungsgemäß wird die Aufgabe dadurch gelöst, daß die Unterlegscheibe, entsprechend der Neigung der Befestigungsfläche bezüglich einer Längsachse eines Schrauben-oder Bolzenschaftes, gegenüber der Mutter verschwenkbar ist.

Die Erfindung beruht demnach auf dem Gedanken, daß sich beim Festziehen einer erfindungsgemäßen Kombimutter, wenn die darunter liegende Unterlegscheibe mit der gegenüber einer Ebene senkrecht zum Bolzenschaft geneigten Oberfläche eines Bauteils oder allgemein einer Befestigungsfläche in Kontakt kommt, die Unterlegscheibe kippt und sich vollflächig an die Befestigungsfläche anlegt und folglich ebenfalls gegenüber dem Bolzen entsprechend der Neigung der Befestigungsfläche geneigt ist. Die Unterlegscheibe passt sich folglich beim Verschrauben der Kombimutter an die Neigung der Befestigungsfläche bezüglich der Längsachse des Schrauben- oder Bolzenschaftes an. Dies ist nur dadurch möglich, daß die Unterlegscheibe im Bezug auf eine zum Bolzenschaft senkrecht stehenden Ebene gekippt werden kann, um eine Schrägstellung entsprechend der Neigung der Befestigungsfläche gegenüber dem Bolzenschaft einzunehmen.

Der Vorteil besteht darin, daß durch das Verschwenken der Unterlegscheibe ein schnelles und einfaches Ausgleichen des Neigungswinkels zwischen der Befestigungsfläche und einer zum Bolzenschaft senkrecht stehenden Ebene ermöglicht wird, wobei die Ausrichtung der Unterlegscheibe und die Anpassung gleichzeitig mit dem Aufschrauben erfolgt und somit keine weiteren Arbeitsschritte ausgeführt werden müssen. Folglich können die Montagezeiten wesentlich verkürzt werden.

In einer vorteilhaften Ausgestaltung der Erfindung ist die Unterlegscheibe gegenüber der Mutter in alle Richtungen frei verschwenkbar, so daß sich die Unterlegscheibe an eine in einer beliebigen Richtung geneigten Befestigungsfläche anpassen kann, wodurch die Kombimutter flexibel einsetzbar ist.

In weiterer Ausgestaltung der Erfindung ist die Unterlegscheibe unverlierbar an der Mutter angeordnet, wodurch jeder Mutter bereits eine passende Unterlegscheibe zugeordnet ist und ein Aufsetzen der Unterlegscheibe auf den Bolzenschaft entfällt. Folglich kann die Montagezeit verkürzt werden.

Dadurch, daß die Unterlegscheibe und die Mutter relativ zueinander verdrehbar sind, wird in vorteilhafter Weise eine Relativbewegung zwischen der Befestigungsfläche und der Unterseite der Unterlegscheibe vermieden. Folglich wird ein Beschädigen der Oberfläche der Befestigungsfläche vermieden.

Durch die Herstellbarkeit einer kraftschlüssigen Verbindung zwischen dem Bolzenschaft, der Mutter, der Unterlegscheibe und der Befestigungsfläche kann in einer weiteren Ausgestaltung der Erfindung eine Verbesserung der Unlösbarkeit der Verbindung erreicht werden.

In günstiger Weise weist die Unterlegscheibe bei einer weiteren Ausführungsform der Erfindung einen inneren Abschnitt auf, dessen Oberseite die Aussenfläche eines Kugelkappenabschnitts bildet und dementsprechend weist die Mutter eine Pressfläche auf, die einen halbkugelförmigen Aufnahmeraum zum Aufnehmen dieses inneren kugelförmigen Abschnitts hat, um so ein Kugelgelenk zu bilden. Durch diesen Gelenkmechanismus ist in vorteilhafterweise eine freie Schwenkbewegung in beliebigen Auslenkungen der Unterlegscheibe gegenüber der Mutter in alle Richtungen möglich.

Um die Pressfläche der Mutter zu vergrößern, weist sie einen Vorsprung auf, der am Außenumfang an der Unterseite, die Mutter umlaufend, entsprechend einer Weiterführung des kugelförmigen Aufnahmeraums der Pressfläche radial nach außen abragt.

Weiterhin dient dieser Vorsprung in vorteilhafter Weise dazu, bei einem extremen Verschwenken der Mutter gegenüber der Unterlegscheibe die Seitenfläche der Mutter von der Oberseite der Unterlegscheibe beabstandet zu halben, um die Erreichbarkeit der Mutter durch ein Festziehwerkzeug zu gewährleisten.

Um die Mutter mit der Unterlegscheibe in einfacher Weise unverlierbar, jedoch drehbar und schwenkbar zu verbinden, um insbesondere ein Verlieren der Unterlegscheibe in axialer Richtung zu verhindern, weist die Mutter eine V-förmige, ringfömig die Mutter umlaufende Hohlkehle auf, die unterhalb der durch den Vorsprung erweiterten Pressfläche angeordnet ist, und in die ein Vorsprung der Unterlegscheibe hineinragt, der am Innenumfang ihrer Durchgangsöffnung herum radial umlaufend nach innen gerichtet ist.

Die V-förmige Hohlkehle wird dabei von der Pressfläche der Mutter und der Oberseite eines nach unten weisenden Fortsatzes, der einen Teil einer kegelförmigen Fläche bildet und sich nach unten aufweitend, schräg nach unten ragt, gebildet.

Der nach innen gerichtete Vorsprung der Unterlegscheibe ist so ausgebildet, daß er eine Weiterführung der kugelförmig verlaufenden, konvexen Oberfläche des inneren Abschnitts der Unterlegscheibe bildet und mit seiner oberen Fläche an der Pressfläche der Mutter anliegt.

Darüber hinaus weist die Unterlegscheibe an ihrer Unterseite eine die Durchgangsöffnung umlaufende Vertiefung auf, deren äußere ringförmige Umfangsfläche parallel zur äußeren Umfangsfläche der Unterlegscheibe gebildet ist und deren Auflagefläche an der Unterseite der Unterlegscheibe oben zur Durchgangsöffnung hin nach oben geneigt ist, so daß sich die Dicke des inneren Abschnitts der Unterlegscheibe zur Mitte hin verringert.

Vorzugsweise weist die Verbindung der Mutter mit der Unterlegscheibe ein Spiel auf, d.h. der Vorsprung der Unterlegscheibe sitzt nicht formschlüssig in der V-förmigen Hohlkehle, sondern besitzt einen Freiraum, innerhalb dem sich folglich die Unterlegscheibe frei bewegen kann bzw. verdreht und verschwenkt werden kann. Dies wird am besten dadurch erreicht, daß der Vorsprung der Mutter nur teilweise in die Hohlkehle hineinragt.

Zweckmäßig wird eine schwenkbare Kombimutter entsprechend einem der vorhergehenden Ansprüche zum Aufschrauben auf Gewindebolzen verwendet, die nicht senkrecht von der Befestigungsfläche aufragen bzw. die an einer Befestigungsfläche befestigt werden, die sich nicht senkrecht zur Längsrichtung des Gewindebolzens befindet, wobei vor dem Aufschrauben der Kombimutter die Neigung der Befestigungsfläche bzw. des Gewindebolzens nicht bekannt sein muß.

### c.) Ausführungsbeispiele

Eine Ausführungsform der vorliegenden Erfindung wird im folgenden anhand eines Beispiels in Bezug auf die beigefügten Zeichnungen näher beschrieben. Es zeigen:
- **Fig. 1:**: eine Seitenansicht im Schnitt einer erfindungsgemäßen Kombimutter im aufgeschraubten Zustand,
- **Fig.2**: eine Seitenansicht im Schnitt einer erfindungsgemäßen Kombimutter im gekippten, aufgeschraubten Zustand,
- **Fig.3**: eine Unterlegscheibe in der Draufsicht,
- **Fig.4**: eine Seitenansicht im Schnitt einer Unterlegscheibe, und
- **Fig.5**: eine Seitenansicht im Schnitt einer Mutter.

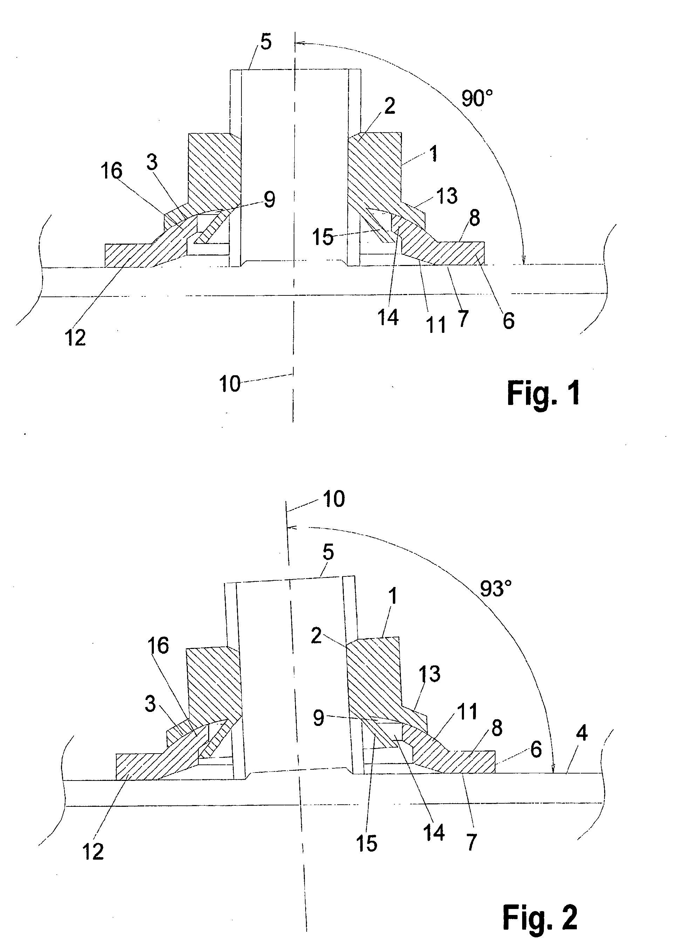

Fig. 1 zeigt die aus der Mutter 1 und der unverlierbar, aber drehbar daran befestigten Unterlegscheibe 6 bestehende Kombimutter im Schnitt, die auf den senkrecht von der Befestigungsfläche 4 aufragenden, ebenfalls im Schnitt dargestellten Bolzenschaft 5, aufgeschraubt ist, wobei die Unterseite 7 der Unterlegscheibe 6 auf der Befestigungsfläche 4 aufliegt und die Pressfläche 3 der Mutter 1 auf der Oberseite 8 der Unterlegscheibe 6 aufliegt. Die Mutter 1, die Unterlegscheibe 6 und der Bolzenschaft 5 haben dieselbe Längsachse, die sich senkrecht zur Befestigungsfläche 4 befindet.

Fig. 2 zeigt die Kombimutter in Fig. 1 im Schnitt und ist auf den nicht senkrecht aufragenden, gegenüber der Senkrechten zur Befestigungsfläche geneigten, z.B. um 3° geneigten Bolzenschaft 5 aufgeschraubt, wobei die Unterseite 7 der Unterlegscheibe 6 auf der Befestigungsfläche 4 aufliegt, und wobei die Pressfläche 3 der Mutter auf der Oberfläche 8 der Unterlegscheibe 6 aufliegt, jedoch die Mutter 1 gegenüber der Unterlegscheibe 6 entsprechend der Neigung des Bolzenschaftes 5 verschwenkt ist, so daß der Bolzenschaft 5 und die Mutter 1 eine Längsachse 10' haben, die gegenüber der Längsachse 10 der Unterlegscheibe geneigt ist.

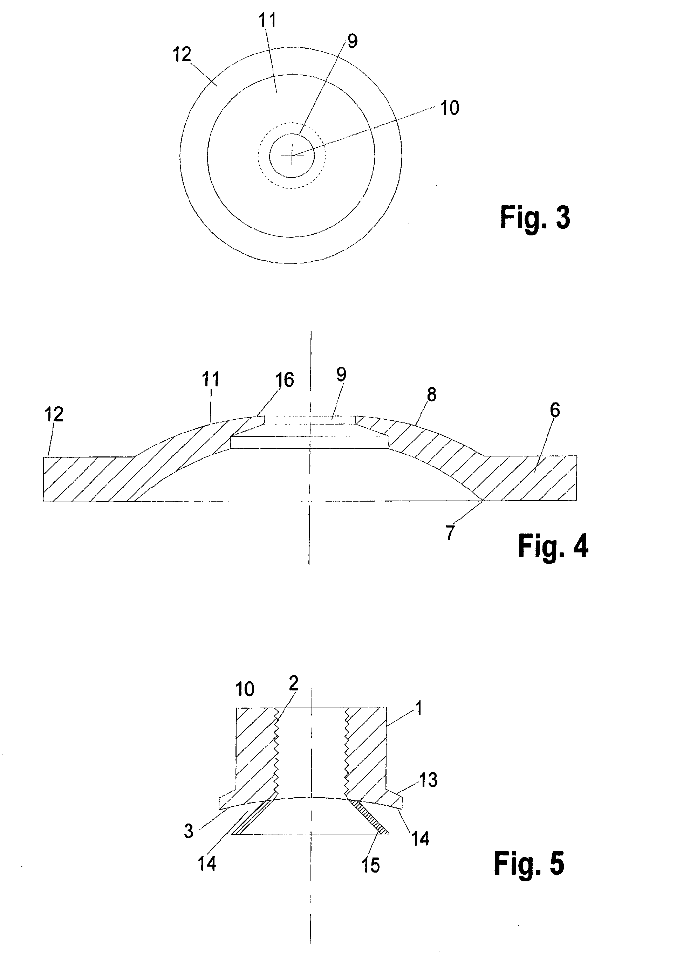

Durch die Mutter 1, die außen z.B. den üblichen Außen-Sechskant (nicht dargestellt) zum Ansetzen eines Schraubenschlüssels aufweist, erstreckt sich, wie in Fig. 5 zu sehen, entlang der Längsachse 10 eine Durchgangsöffnung mit einem Innengewinde 2 hindurch.

Die Pressfläche 3, die im verschraubten Zustand der Kombimutter an der Oberseite der Unterlegscheibe anliegt, wird durch die symmetrische Rotation eines Kreissegments um die Längsachse 10 der Mutter 1 gebildet, dessen Mittelpunkt sich auf der Längsachse 10 in Richtung der Festziehrichtung befindet, so daß die Pressfläche 3 , wie in Fig. 1 und 2 zu sehen, konkav ist, und einen Teil einer kugelförmigen Fläche bildet. Durch einen Vorsprung 13, der radial von einer Kante, die von der Unterseite 7 und der Außenseite der Mutter 1 gebildet wird, abragt und die Mutter 1 ringförmig umgibt, ist die kugelförmige Pressfläche 3 vergrößert.

Wie auch in Fig. 5 zu sehen ist, ragt von der Pressfläche 3 in der Nähe der Durchgangsöffnung 9 ein schräg, z.B. um 45° gegenüber der Pressfläche 3, nach unten gerichteter Fortsatz 15 ab. Dieser Fortsatz 15 erstreckt sich in radialer Richtung in etwa annähernd bis zum äußeren Ende des Vorsprungs 13, wobei sich zwischen dem Fortsatz 15 und der Pressfläche 3 eine Hohlkehle 14 in Form eines V-förmigen Zwischenraumes bildet, der sich, von außen gesehen, zur Mitte hin verengt.

Durch Rotation des Fortsatzes 15 um die Längsachse 10 der Mutter 1 entsteht ein Teil einer kegelförmigen Fläche, die sich von der Pressfläche 3 der Mutter 1 in der Nähe der Durchgangsöffnung 9 nach unten hin aufweitet. Die Hohlkehle 14 erstreckt sich dementsprechend ringförmig um die Längsachse 10 herum.

In Fig. 3 ist die Unterlegscheibe 6 mit einer mittigen Durchgangsöffnung 9 gezeigt. Die Unterlegscheibe 6 besteht aus einem ringförmigen Inneren Abschnitt 11, der die Durchgangsöffnung 9 aufweist, und einem ringförmigen Äußeren Abschnitt 12, der um den Inneren Abschnitt 11 angeordnet ist bzw. ihn umgibt. Wie in Fig. 4 zu sehen, ist der Äußere Abschnitt eine flache Scheibe, deren Unterseite 7 die gesamte Auflagefläche12 gefläche 12 der Unterlegscheibe 6 bildet und der Innere Abschnitt 11 ein Kugelkappenabschnitt, der einen Vorsprung 16 aufweist, der sich nur teilweise zur Mitte hin erstreckt, um die Durchgangsöffnung 9 zu bilden. Dieser radial nach innen ragende Vorsprung 16 bildet mit seiner oberen Fläche einen Teil der konvexen, kugelförmige Oberfläche. Der mit der Unterlegscheibe 6 einstückig ausgebildete Vorsprung 16 weist auch eine ringförmige Vertiefung im Inneren Abschnitt 11 auf, die sich an der Unterseite des Inneren Abschnitts 11 in der Nähe der Durchgangsöffnung befindet, wobei sich die Dicke des Vorsprungs 13 zur Mitte hin verringert, so daß der Vorsprung 16 in etwa V-förmig ausgebildet ist und sich zur Mitte hin zuspitzt.

Wie in Fig. 1 und 2 gezeigt, kann durch das Eingreifen des Vorsprungs 16 in die Hohlkehle 14 die Unterlegscheibe 6 zwar relativ zur Mutter gedreht und verschwenkt werden, jedoch nicht von dieser abgenommen werden, so daß die Unterlegscheibe 6 unverlierbar mit der Mutter 1 verbunden bleibt.

Wie ebenfalls in Fig. 1 zu sehen, ist der Durchmesser des Durchgangsloches 9 größer als der kleinste Durchmesser der Hohlkehle 14, so daß der Vorsprung 16 nur teilweise in die Hohlkehle 14 ragt und folglich ein Spiel zum Verschwenken der Unterlegscheibe 6 gegenüber der Mutter 1 vorhanden ist. Darüber hinaus ist die durch den Fortsatz 15 gebildete untere Auflagefläche der Hohlkehle gegenüber der unteren Seite des Vorsprungs 16 mehr geneigt, wodurch sich ebenfalls ein V-förmiges Spiel ergibt, das für die Verschwenkbarkeit der Unterlegscheibe 6 notwendig ist.

Beim Verschwenken der Unterlegscheibe 6 gegenüber der Mutter 1 bilden die Oberseite des konvexen, kugelförmigen Inneren Abschnitts 11 und die konkave Pressfläche 3 der Mutter 1 zwei aneinanderliegende Gelenkflächen.

Im verschwenkten Zustand der Kombimutter in Fig. 2 liegt an der Seite mit dem spitzen Winkel die durch den Fortsatz 15 gebildete untere Auflagefläche der Hohlkehle 14 an der unteren Seite des Vorsprungs 16 an, wohingegen an der Seite mit dem stumpfen Winkel ein dreieckiger Freiraum zwischen der unteren Auflagefläche der Hohlkehle 14 und der unteren Seite des Vorsprungs 16 der Mutter 1 gebildet wird.

Der Fortsatz 15 der Mutter 1 in Fig. 1 erstreckt sich durch die Durchgangsöffnung der Unterlegscheibe 6 bis in etwa zu Hälfte der Dicke der Unterlegscheibe 6 hindurch und der größte äußere Radius der durch den Fortstz 15 gebildeten kegelförmigen Fläche ist kleiner als der Durchmesser der ringförmigen Vertiefung in der Unterlegscheibe 6, so daß ein für das Verschwenken notwendiger Bewegungsfreiraum vorhanden ist.

### BEZUGSZEICHENLISTE

- 1: Mutter
- 2: Innengewinde
- 3: Pressfläche
- 4: Befestigungsfläche
- 5: Bolzenschaft
- 6: Unterlegscheibe
- 7: Unterseite
- 8: Oberseite
- 9: Durchgangsöffnung
- 10: Längsachse
- 11: Innerer Abschnitt
- 12: Äußerer Abschnitt
- 13: Vorsprung
- 14: Hohlkehle
- 15: Fortsatz
- 16: Vorsprung

## Patentansprüche

1. Kombimutter mit
- einer Mutter (1) mit einem Innengewinde (2) zum Aufschrauben auf einen Schrauben- oder Bolzenschaft (5) mit einem Außengewinde passend zum Innengewinde (2) der Mutter (1), wobei die Mutter (1) eine stirnseitige Pressfläche (3) aufweist,
- einer Unterlegscheibe (6) mit einer Durchgangsöffnung (9), die unter der Pressfläche (3) der Mutter (1) angeordnet ist, wobei die Unterlegscheibe (6) im aufgeschraubten Zustand der Mutter (1) an einer Befestigungsfläche (4) anliegt,
wobei
- die Unterlegscheibe (6), entsprechend der Neigung der Befestigungsfläche (4) bezüglich einer Längsachse (10) des Schrauben- oder Bolzenschaftes (5), gegenüber der Mutter (1) verschwenkbar ist, indem
- die Unterlegscheibe (6) einen inneren Abschnitt (11) aufweist, dessen Oberseite einen Teil einer konvexen, kugelförmigen Fläche bildet, an dem die Pressfläche (3) der Mutter (1), die entsprechend einen Teil einer konkaven, kugelförmigen Fläche bildet, anliegt,
**dadurch gekennzeichnet, dass**
- die Unterlegscheibe (6) und die Mutter (1) relativ zueinander verdrehbar, unverlierbar angeordnet sind, die Mutter (1) am Außenumfang an der Unterseite (7) einen radial nach außen weisenden, ringförmig umlaufenden Vorsprung (13) aufweist, dessen Unterseite einen äußeren ringförmigen Abschnitt der konkaven unteren Pressfläche (3) der Mutter (1) bildet, und
- die Mutter (1) einen Hinterschnitt aufweist, insbesondere eine V-förmige Hohlkehle (14), die von einem ringförmigen Abschnitt der Pressfläche (3) der kugelförmigen konkaven Fläche und einem ringförmigen umlaufenden, schräg nach unten weisenden Fortsatz (15) gebildet wird, der von der Pressfläche (3) in der Nähe der Durchgangsöffnung (9) abragt.

2. Kombimutter nach Anspruch 1,
**dadurch gekennzeichnet, dass**
im verschwenkten Zustand der verschraubten Kombimutter ein Kraftschluss zwischen dem Schrauben- oder Bolzenschaft (5), der Mutter (1), der Unterlegscheibe (6) und der Befestigungsfläche (4) herstellbar ist.

3. Kombimutter nach einen der vorhergehenden Ansprüche,
**dadurch gekennzeichnet, dass**
- die Unterlegscheibe (6) am Innenumfang ihrer Durchgangsöffnung (9) an der Oberseite (8) wenigstens einen radial schräg nach innen weisenden, insbesondere ringförmig umlaufenden Vorsprung (16) aufweist, der in die Hohlkehle (14) passt, und/oder insbesondere
- der Vorsprung (16) der Unterlegscheibe (6) nur teilweise in die Hohlkehle (14) hineinragt.

4. Kombimutter nach einen der vorhergehenden Ansprüche,
**dadurch gekennzeichnet, dass**
die Verbindung der Mutter (1) und der Unterlegscheibe (6) im unverschraubten Zustand der Mutter (1) ein Spiel aufweist, so dass die Mutter (1) und die Unterlegscheibe (6) zueinander verdrehbar sind und die Unterlegscheibe (6) in Bezug auf die Längsachse (10) der Mutter (1) verschwenkbar ist.

5. Kombimutter nach einen der vorhergehenden Ansprüche,
**dadurch gekennzeichnet, dass**
der Innendurchmesser eines äußeren Abschnitts (12) der Unterlegscheibe (6) größer ist, als der Außendurchmesser der Mutter (1) an der Pressfläche (3).

6. Kombimutter nach einen der vorhergehenden Ansprüche,
**dadurch gekennzeichnet, dass**
die Durchgangsöffnung (9) der Unterlegscheibe (6) an ihrer engsten Stelle größer ist als der Innendurchmesser der Hohlkehle (14) der Mutter (1).

7. Kombimutter nach einen der vorhergehenden Ansprüche,
**dadurch gekennzeichnet, dass**
die Unterlegscheibe (6) aus einem kaum komprimierbaren Material, insbesondere Metall besteht.

## Claims

1. Fastener assembly having a nut (1) with an internal screw thread (2) for screwing onto a screw or bolt shaft (5) having an external screw thread matching the internal screw thread (2) of the nut (1), where the nut (1) has a pressure surface (3) on its end face, a washer (6) with a through-hole (9) which is disposed under the pressure surface (3) of the nut (1), where the washer (6), when the nut (1) has been screwed on, is in contact with a fastening surface (4), where the washer (6) can be tilted relative to the nut (1) according to the inclination of the fastening surface (4) relative to a longitudinal axis (10) of the screw or bolt shaft (5) because the washer (6) incorporates an inner portion (11) the upper side of which forms part of a convex spherical surface with which the pressure surface (3) of the nut (1), which forms part of a matching concave spherical surface, is in contact, **characterised in that** the washer (6) and the nut (1) are arranged so so that they can be turned relative to each other and are undetachably attached to each other and the nut (1) incorporates on its outer circumference and on its underside (7) a projecting portion (13) projecting radially outwards and running annularly all the way round the circumference and having an underside forming an outer annular portion of the concave lower pressure surface (3) of the nut (1), and the nut (1) incorporates an undercut, particularly a V-shaped hollow portion (14) formed by an annular portion of the pressure surface (3) of the spherical concave surface and a projecting annular portion (15) pointing at an angle downwards and and projecting downwards from the pressure surface (3) close to the through-hole (9).

2. Fastener assembly in accordance with claim 1, **characterised in that**, when the fastener assembly is tilted, a force fit is produced between the screw or bolt shaft (5), the nut (1), the washer (6) and the fastening surface (4).

3. Fastener assembly in accordance with any one of the foregoing claims, **characterised in that** the washer (6) incorporates on the upper side (8) on the inner circumference of its through-hole (9) one or more projecting portions (16), particularly running annularly all the way round and pointing radially at an angle inwards and fitting into the hollow portion (14), and/or **in that** the projecting portion (16) of the washer (6) projects only partly into the hollow portion (14).

4. Fastener assembly in accordance with any one of the foregoing claims, **characterised in that** the connection between the nut (1) and the washer (6), when the nut (1) is not screwed on, has sufficient play to allow the nut (1) and the washer (6) to be turned relative to each other and the washer (6) to be tilted relative to the longitudinal axis (10) of the nut (1).

5. Fastener assembly in accordance with any one of the foregoing claims, **characterised in that** the inside diameter of an outer portion (12) of the washer (6) is larger than the outside diameter of the nut (1) at the pressure surface (3).

6. Fastener assembly in accordance with any one of the foregoing claims, **characterised in that** the through-hole (9) of the washer (6) at its narrowest point is larger than the inside diameter of the hollow portion (14) of the nut (1).

7. Fastener assembly in accordance with any one of the foregoing claims, **characterised in that** the washer (6) is made from an as incompressible a material as possible, particularly metal.

## Revendications

1. Système d'écrou composé d'un écrou (1) présentant un taraudage (2) pour le visser sur la tige (5) d'une vis ou d'un goujon présentant un filetage adapté au taraudage (2) de l'écrou (1), sachant que l'écrou (1) présente une surface frontale (3) de compression, d'une rondelle intercalaire (6) présentant un orifice de passage (9) agencé sous la surface de compression (3) de l'écrou (1), sachant que la rondelle intercalaire (6) applique, lorsque l'écrou se trouve à l'état vissé (1), contre une surface de fixation (4), sachant que la rondelle intercalaire (6) peut pivoter, d'une manière correspondant à l'inclinaison de la surface de fixation (4) relativement à un axe longitudinal (10) de la tige de vis ou de goujon (5), par rapport à l'écrou (1), car la rondelle intercalaire (6) présente un segment intérieur (11) dont le dessus forme une partie d'une surface convexe sphéroïdale contre laquelle applique la surface de compression (3) de l'écrou (1) qui, de manière correspondante, forme une partie d'une surface concave sphéroïdale, **caractérisé en ce que** la rondelle intercalaire (6) et l'écrou (1) peuvent tourner l'un relativement à l'autre et sont agencés de manière imperdable, **en ce que** l'écrou (1) présente, sur sa périphérie extérieure, sur le côté inférieur (7), une protubérance (13) saillant radialement vers l'extérieur et d'un tracé périphérique annulaire, protubérance dont la face inférieure forme un segment extérieur annulaire de la surface de compression (3) inférieure concave de l'écrou (1), et **en ce que** l'écrou (1) présente une contre-dépouille, en particulier un congé (14) en V formé par un segment annulaire de la surface de compression (3) que présente la surface concave sphéroïdale et par un appendice (15) périphérique annulaire regardant en biais vers le bas et faisant saillie de la surface de compression (3) à proximité de l'orifice de passage (9).

2. Système d'écrou selon la revendication 1, **caractérisé en ce que** lorsque le système d'écrou vissé se trouve en l'état pivoté, il est possible d'instaurer une liaison par adhérence de forces entre la tige (5) de la vis ou du goujon, l'écrou (1), la rondelle intercalaire (6) et la surface de fixation (4).

3. Système d'écrou selon l'une des revendications précédentes, **caractérisé en ce que** la rondelle intercalaire (6) présente sur la circonférence intérieure de son orifice de passage (9), sur le côté supérieur (8), au moins une saillie (16) regardant radialement en biais vers l'intérieur, en particulier au tracé annulaire, saillie qui épouse le congé (14) et/ou **en ce que** la saillie (16) de la rondelle intercalaire (6) ne fait saillie que partiellement dans le congé (14).

4. Système d'écrou selon l'une des revendications précédentes, **caractérisé en ce que** la liaison de l'écrou (1) et de la rondelle intercalaire (6) présente, lorsque l'écrou (1) n'est pas vissé, un jeu tel que l'écrou (1) et la rondelle intercalaire (6) peuvent tourner l'un par rapport à l'autre de sorte que l'écrou (1) et la rondelle intercalaire (6) peuvent tourner l'un par rapport à l'autre et que la rondelle intercalaire (6) peut pivoter relativement à l'axe longitudinal (10) de l'écrou (1).

5. Système d'écrou selon l'une des revendications précédentes, **caractérisé en ce que** le diamètre intérieur d'un segment extérieur (12) de la rondelle intercalaire (6) est plus grand que le diamètre extérieur de l'écrou (1) sur la surface de compression (3).

6. Système d'écrou selon l'une des revendications précédentes, **caractérisé en ce que** l'orifice de passage (9) de la rondelle intercalaire (6) est plus grand, en son endroit le plus étroit, que le diamètre intérieur du congé (14) de l'écrou (1).

7. Système d'écrou selon l'une des revendications précédentes, **caractérisé en ce que** la rondelle intercalaire (6) se compose d'un matériau difficilement compressible, en particulier d'un métal.
